# EUROPÄISCHE PATENTSCHRIFT

(11) **EP 1 464 227 B1**
(45) Veröffentlichungstag und Bekanntmachung des Hinweises auf die Patenterteilung: **28.07.2010**
(21) Anmeldenummer: 04007967.5
(22) Anmeldetag: 01.04.2004
(51) Int. Cl.: A22C 17/12, A22B 5/00, A22C 17/00

(54) **Vorrichtung zum Entschwarten oder Trimmen eines Fleischstücks oder eines Stücks Schlachttier**
Device for derinding or trimming a piece of meat or a part of a carcass
Dispositif à découenner ou parer un morceau de viande ou une partie d'une carcasse

(30) Priorität: 04.04.2003 DE 10315621
(43) Veröffentlichungstag der Anmeldung: 06.10.2004
(73) Patentinhaber: Maja-Maschinenfabrik Hermann Schill GmbH & Co. KG, 77694 Kehl-Goldscheuer (DE)
(72) Erfinder: Schill, Joachim, 77694 Kehl (DE); Ilch, Hartmut, 77694 Kehl (DE)
(74) Vertreter: Lucht, Silvia

(56) Entgegenhaltungen:
- EP-B- 0 494 935
- WO-A-01/67873
- US-A- 5 738 577
- US-A- 5 902 177

## Beschreibung

### Stand der Technik

Die Erfindung geht aus von einer Vorrichtung und einem Verfahren zum Entschwarten oder Trimmen eines Fleischstücks oder eines Stücks Schlachttier nach dem Oberbegriff des Anspruchs 1.

Bei der Bearbeitung von einem Fleischstück oder einem Stück Schlachttier werden Haut, Fett, Muskeln, Sehnen und Schwarte entfernt. Sofern das Fleischstück eine einigermaßen gleichmäßige Dicke aufweist, kann das Entschwarten und Enthäuten mithilfe einer Enthäutungs-, Entvlies und/ oder Entschwartungsvorrichtung maschinell erfolgen. Dies gilt zum Beispiel für einen ausgelösten Schweinebauch. Die Reste von Fett, die beim automatischen Bearbeiten an einer Fleischplatte verbleiben oder die Reste von Fleisch, die beim automatischen Bearbeiten an einer Flettplatte verbleiben, werden jedoch bislang von Hand entfernt. Hierbei muß der Bearbeiter zwischen Muskelfleisch und Fett unterscheiden. An den Rändern des ausgelösten Schweinebauchs sind häufig Hautfalten vorhanden. Aufgrund der unregelmäßigen Dicke ist an diesen Stellen eine Nachbearbeitung von Hand ebenfalls notwendig. Diese Bearbeitung von Hand ist nicht nur zeit- und kostenintensiv sondern auch mit einer Verletzungsgefahr für den Bearbeiter verbunden.

Das Abschwarten eines ausgelösten Schweineschinkens erfolgt bislang ebenfalls teilweise von Hand. Der Schinken mit Fuß oder die Schulter mit Rippe wird durch einen Bearbeiter von Hand aufgenommen und an die Klinge einer Abschwartungsmaschine herangeführt. Dabei muss der Schinken so ausgerichtet werden, dass die Klinge die Schwarte beim Anschneiden erfassen kann. Sobald die Klinge in die Schwarte eingedrungen ist, wird der Schinken durch Walzen an die Klinge angedrückt und gedreht. Dies bedeutet eine hohe Verletzungsgefahr für den Bearbeiter insbesondere im Bereich seiner Hände. Darüber hinaus ist Bearbeitung von Hand mit hohen Kosten verbunden.

Aus der US-A-5 902 177 ist eine Vorrichtung zum Entfernen von Rippen aus einem Schlachttier bekannt. Hierzu wird das zu bearbeitende Stück auf einer Unterlage angeordnet. Die Oberfläche des zu bearbeitenden Stücks wird optisch erfasst und ein mit einem Schneidwerkzeug ausgestatteter Roboter gesteuert um die die Rippen enthaltende Schicht abzuschneiden. Zum Abtrennen anderer Bereiche eines Schlachttiers ist die Vorrichtung nicht geeignet.

Aus der US-A-5 738 577 ist eine Vorrichtung zum Abschwarten und Enthäuten von Stücken von Schlachttieren bekannt, bei dem das Stück auf einem Transportband angeordnet und einem Messer zugeführt wird. Dabei ist das manuelle Ausrichten und Anordnen des Stücks auf dem Transportband notwendig.

Aus der WO 01/67873 A ist eine Vorrichtung zum Zerteilen von Schlachttieren bekannt, bei der die Karkassen transportiert werden, und bei der mittels einer Kamera und eines Computers die Größe und die Position der Karkasse während der Bewegung bestimmt werden. Ein mit einem Kreismesser ausgestatteter Roboterarm wird durch den Computer gesteuert und zerteilt die Karkasse während der Bewegung. Die Vorrichtung eignet sich jedoch nicht zum Enthäuten oder Abschwarten von Stücken von Schlachttieren.

### Die Erfindung und ihre Vorteile

Demgegenüber hat die erfindungsgemäße Vorrichtung mit den Merkmalen des Anspruchs 1 den Vorteil, dass die abzutrennenden Teile durch ein Sensorsystem erkannt werden. Hierzu sind eine Kamera mit Bildverarbeitungssystem und eventuell zusätzlich ein Abstandsmeßsystem vorgesehen. Die Kamera und das Bildverarbeitungssystem erfassen die Koordinaten des abzutrennenden Teils insbesondere an dessen Oberfläche in zwei oder drei Dimensionen. Der Abstand zwischen der Oberfläche und dem Manipulatorarm des Roboters kann entweder ebenfalls mit der Bildverarbeitung oder mit einem Abstandsmesssystem erfasst werden. Damit lassen sich die Koordinaten der Oberfläche des abzutrennenden Teils vollständig erfassen. Diese erfassten Daten werden von Mikroprozessoren zu Signalen verarbeitet. Die Signale steuern entweder ein Schneidwerkzeug oder einen Greifer an einem Manipulatorarm eines Industrieroboters. Der Manipulatorarm bewegt das Schneidwerkzeug an das ruhende oder mit konstanter Geschwindigkeit bewegte Stück heran. Mithilfe des Schneidwerkzeugs werden die Teile von dem Stück abgetrennt. Der mit einem Greifer ausgestattete Manipulatorarm nimmt das Stück auf und führt es einem fest stehenden Schneidwerkzeug zu. Dabei richtet der Greifer das Stück so aus, dass das Teil durch das Schneidwerkzeug abgetrennt werden kann.

Eine Nachbearbeitung von Hand ist nicht notwendig. Um absolut sicher zu gehen, dass die Teile vollständig abgetrennt wurden, kann das Stück nach der Bearbeitung mithilfe der Kamera und dem Bildverarbeitungssystem erneut untersucht werden. Sind noch Reste am Stück vorhanden, so wird das Schneidwerkzeug erneut angesteuert. Die Steuerung des Manipulatorarms erfolgt mithilfe eines Rechners.

Mit der erfindungsgemäßen Vorrichtung können Bereiche von Fleischstücken oder Stücken von Schlachttieren bearbeitet werden, die unregelmäßig geformt oder nur schwer zugänglich sind und daher bislang ausschließlich von Hand bearbeitet werden konnten. Die Unterscheidung zwischen den abzutrennenden Teilen und der Umgebung erfolgt mithilfe der Kamera und der Bildverarbeitung.

Die mit der erfindungsgemäßen Vorrichtung bearbeiteten Lebensmittelstücke können nach dem Abtrennen der unerwünschten Teile der weiteren Verarbeitung oder der Verpackung zugeführt werden.

Bei dem Industrieroboter kann es sich entweder um einen Roboter mit einem Manipulatorarm mit mehreren Freiheitsgraden oder um einen Skara Roboter mit einem Manipulatorarm handeln. Die Anzahl der Freiheitsgrade ist bei letzterem geringer jedoch je nach Anwendung ausreichend.

Nach einer vorteilhaften Ausgestaltung der Erfindung ist als Abstandsmesssystem ein Sender, ein Empfänger und eine Auswerteeinheit vorgesehen. Die Bestimmung des Abstands erfolgt berührungslos. Sender und Empfänger können dabei optische oder akustische Signale verwenden. So kann beispielsweise ein Laser-Entfernungsmesser eingesetzt werden. Ist die Oberfläche des zu bearbeitenden Stücks nahezu eben, so genügt die Bestimmung des Abstands zwischen einem Nullpunkt und einem Messpunkt an der Oberfläche des Stücks im Bereich des abzutrennenden Teils. Dies gilt beispielsweise bei einem ausgelösten Schweinebauch. Der Manipulatorarm mit dem Schneidwerkzeug wird anschließend um eine Strecke, die aus dem gemessenen Abstand bestimmt wird, an die Oberfläche des Stücks herangefahren. Schließlich wird das Schneidwerkzeug in einem Bereich über die Oberfläche des Stücks bewegt, der dem mithilfe der Kamera und der Bildverarbeitung ermittelten abzutrennenden Teil entspricht. Dabei wird das Schneidwerkzeugs so angetrieben, dass das Teil von dem Stück abgeschnitten wird. Bei den abzutrennenden Teilen kann es sich um Reste von Fleisch oder Fett handeln, die beim maschinellen Entschwarten an der Oberfläche verblieben sind. Derartige Reste werden bislang von Hand mithilfe eines Trimmers beseitigt. Dabei handelt es sich um ein Messer mit einer zur Rotation angetriebenen ringförmigen Klinge mit Schnitttiefeneinstellung. Ein derartiges Messer kann an dem Manipulatorarm vorgesehen sein, um die Reste zu entfernen. Da sich das rote Muskelfleisch und das weiße Fett in ihrer Farbe hinreichend unterscheiden, können die Bereiche mithilfe der Kamera und der Bildverarbeitung voneinander unterschieden werden. Aus der Größe der abzutrennenden Bereiche kann die Dicke des Bereichs zumindest näherungsweise bestimmt werden. Die Schnitttiefe wird entsprechend der Dicke eingestellt. Der mit einem Trimmer ausgestattete Manipulatorarm fährt an der Oberfläche entlang und trennt die Reste von dem Stück ab.

Anstelle eines Trimmers mit einer ringförmigen Klinge kann auch eine scheibenförmige rotierende Klinge vorgesehen sein. Darüber hinaus sind andere Messer, die einen ziehenden Schnitt ausführen oder die zu einen Sägebewegung angetrieben werden, möglich.

Nach einer weiteren vorteilhaften Ausgestaltung der Erfindung sind drei Sender und Empfänger vorgesehen, um den Abstand zwischen drei Messpunkten und einem vorgegebenen Nullpunkt zu bestimmen. Ist die Oberfläche des Stücks nicht eben, wie beispielsweise die nach außen weisende Oberfläche einer Schlachttierhälfte, so genügt es nicht, den Abstand zwischen der Oberfläche und einem Nullpunkt zu bestimmen. Vielmehr ist es notwendig, die Form des Stücks an der zu bearbeitenden Stelle zu ermitteln. Dies geschieht durch die Bestimmung des Abstands zwischen drei Messpunkten und einem vorgegebenen Nullpunkt. Dabei dürfen die drei Messpunkte nicht auf einer Linie liegen. Aus den aus den Abständen gewonnenen Daten kann die Steigung oder das Gefälle in dem untersuchten Bereich bestimmt werden. Daraus ergibt sich nicht nur die Strecke, die das Schneidwerkzeug bis zur Oberfläche des Stücks zurücklegen muss, sondern auch der Winkel, unter dem das Schneidwerkzeug an die Oberfläche angesetzt werden muss. Eine derartige Bearbeitung ist beispielsweise zur Entschwartung entlang der Zerlegelinien einer Hälfte eines geschlachteten Schweins notwendig. Entlang der Zerlegelinien wird das Schlachttier in mehrere größere Stücke zerteilt. Bisher wird der Schweinebauch erst nach dem Auslösen entschwartet. Dies hat jedoch den Nachteil, dass die Ränder des Schweinebauchs Hautfalten aufweisen und sich daher nicht vollständig maschinell entschwarten lassen. An den Rändern verbleiben stets Schwartenreste. Mit der erfindungsgemäßen Vorrichtung kann die Schweinehälfte bereits vor dem weiteren Zerlegen und dem Auslösen des Schweinebauchs entlang der Zerlegelinien entschwartet werden. Die den Schweinebauch begrenzenden Zerlegelinien, an denen Hautfalten auftreten, befinden sich an der Schulter und oberhalb des Hinterlaufs. Um in diesen Bereichen zu entschwarten, wird die aufgehängte Schlachttierhälfte mithilfe von Klammern an einer Platte befestigt. Dabei hat die Platte eine Farbe, welche sich stark von der Farbe des Schweins unterscheidet, beispielsweise blau. Mithilfe der Kamera und dem Bildverarbeitungssystem werden anhand der Umrisse der Schweinhälfte die zu bearbeitenden Bereiche erkannt. Anhand der Daten aus der Abstandsmessung wird das Schneidwerkzeug, eine Entschwartungsvorrichtung, an die Oberfläche herangeführt und unter dem ermittelten Winkel an die Oberfläche angesetzt. Beim Führen der Enrschwartungsvorrichtung über die Oberfläche des Schlachttiers ist Winkel gegebenenfalls entsprechend der Form der Oberfläche zu variieren.

Die Form der Oberfläche kann statt mit einem Abstandsmesssystem auch mit einer Kamera und einer Bildverarbeitung bestimmt werden.

Bei der Enthäutungs- und Entschwartungsvorrichtung kann es sich um eine mobile Vorrichtung handeln, wie sie zur Entschwartung von Hand eingesetzt wird. Darüber hinaus ist es möglich, eine fest stehende Enthäutungs- und Entschwartungsvorrichtung einzusetzen, an die das Stück mithilfe eines Greifers herangeführt wird. Dies ist bei einer Schlachttierhälfte nicht angebracht, jedoch eignen sich fest stehende Entschwartungsvorrichtungen bei bereits ausgelösten Bauchstücken, Schinken oder Schultern. Die Enthäutungs- und Entschwartungsvorrichtungen basieren auf dem Prinzip, dass über eine Zugwalze ein Behandlungsgut an eine Klinge angedrückt und gegenüber der Klinge bewegt wird. Dabei wird der zwischen Klinge und Zugwalze befindliche Teil vom Behandlungsgut abgeschnitten. Über den Abstand zwischen Zugwalze und Klinge kann die Dicke der abgeschnittenen Schicht vorgegeben werden. Je nach Dicke und Art der abgetrennten Schicht spricht man von Entschwarten, Enthäuten oder Entvliesen.

Zum Entschwarten eines Schinkens mit Fuß oder eines Schulter mit Rippe wird das Stück auf einer Unterlage in einer vorgegebenen Position ausgerichtet. Anhand der Kamera und des Bildverarbeitungssystems wird die Schwarte und die Position, an der die Klinge einer Entschwartungsvorrichtung ansetzen kann, ermittelt. Anschließend nimmt ein an dem Manipulatorarm des Industrieroboters angeordneter Greifer das Stück auf und führt es einer fest stehenden Entschwartungsvorrichtung zu. Sobald die Klinge der Entschwartungsvorrichtung in die Schwarte eingedrungen ist, wird das Stück mithilfe der Zugwalze transportiert. Der Greifer kann sich daher von dem Stück lösen und dieses erst dann wieder aufnehmen, wenn die Entschwartung beendet ist.

Nach einer weiteren vorteilhaften Ausgestaltung der Erfindung ist als Anordnungsvorrichtung ein Transportband vorgesehen. Es dient dazu, das Stück von einer Bearbeitungsstation zur nächsten zu transportieren. Das auf dem Transportband aufliegende Stück kann von dem oberhalb angeordneten Sensorsystem analysiert werden. Hierzu kann das Transport angehalten werden. Der Manipulatorarm des Industrieroboters ergreift oder bearbeitet das Stück. Verbleibt das Stück bei der Bearbeitung auf dem Transportband, so kann es nach Abschluss der Bearbeitung auf dem Transportband weiter transportiert werden.

Nach einer weiteren vorteilhaften Ausgestaltung der Erfindung ist eine Absaugvorrichtung vorgesehen, welche die abgeschnittenen Teile absaugt. Die Teile können anschließend gesammelt und gegebenenfalls verarbeitet werden.

Nach einer weiteren vorteilhaften Ausgestaltung der Erfindung ist der Industrieroboter mit einem Reinigungsgerät ausgestattet. Dabei kann es sich zum Beispiel um ein Dampfreinigungsgerät mit Sprühlanze handeln. Damit kann die Vorrichtung von selbst eine Reinigung ihrer mit dem Lebensmittel Stücke in Berührung kommenden Teile und eventuell der Umgebung durchführen.

Weitere Vorteile und vorteilhaften Ausgestaltung in der Erfindung sind den Ansprüchen zu entnehmen.

Sämtliche Merkmale der Erfindung können sowohl einzeln als auch in beliebiger Kombination miteinander erfindungswesentlich sein.

## Patentansprüche

1. Vorrichtung zum Entschwarten oder Trimmen eines Fleischstücks oder eines Stücks Schlachttier durch Abschneiden eines oder mehrerer Teile von einem Fleischstück oder einem Stück Schlachttier,
wobei eine Anordnungsvorrichtung zum Anordnen des Stücks vorgesehen ist,
wobei ein Industrieroboter mit einem Manipulatorarm vorgesehen ist, wobei ein Schneidwerkzeug vorgesehen ist, welches das Teil von dem Stück abtrennt,
wobei ein Sensorsystem, welches die Koordinaten der Oberfläche des von dem Stück abzutrennenden Teils erkennt, vorgesehen ist, und wobei das Sensorsystem eine Kamera und ein Bildverarbeitungssystem umfasst,
**dadurch gekennzeichnet,**
**dass** als Schneidwerkzeug eine mobile oder fest stehende Enthäutungs- und/oder Entschwartungsvorrichtung mit einer Klinge und einer das Stück an die Klinge andrückenden Zugwalze vorgesehen ist, und,
**dass** das Schneidwerkzeug an dem Manipulatorarm vorgesehen ist oder dass der Manipulatorarm mit einem Greifer ausgestattet ist.

2. Vorrichtung nach Anspruch 1, **dadurch gekennzeichnet, dass** das Sensorsystem ein Abstandsmesssystem umfasst, welches den Abstand zwischen einem vorgegebenen Nullpunkt und einem Messpunkt an der Oberfläche des Stücks bestimmt.

3. Vorrichtung nach Anspruch 2, **dadurch gekennzeichnet, dass** als Abstandsmesssystem ein Sender, ein Empfänger und eine Auswerteeinheit vorgesehen sind.

4. Vorrichtung nach Anspruch 2, **dadurch gekennzeichnet, dass** das Abstandsmesssystem mit drei Sendern und Empfängern zur berührungsfreien Bestimmung des Abstands zwischen einem Nullpunkt und drei Messpunkten an der Oberfläche des Stücks ausgestattet ist.

5. Vorrichtung nach Anspruch 3 oder 4, **dadurch gekennzeichnet, dass** optische oder akustische Sender und Empfänger vorgesehen sind.

6. Vorrichtung nach einem der vorhergehenden Ansprüche, **dadurch gekennzeichnet, dass** als Anordnungsvorrichtung ein Transportband vorgesehen ist.

7. Vorrichtung nach einem der vorhergehenden Ansprüche, **dadurch gekennzeichnet, dass** als Anordnungsvorrichtung eine Platte und mehrere Klammern zum Befestigen des Stücks an der Platte vorgesehen sind.

8. Vorrichtung nach Anspruch 7, **dadurch gekennzeichnet, dass** die Platte eine von der Farbe des Stücks abweichende Farbe aufweist.

9. Vorrichtung nach Anspruch 6, **dadurch gekennzeichnet, dass** an dem Industrieroboter ein Greifer vorgesehen ist, der das Stück von dem Transportband aufnimmt und einer fest stehenden Enthäutungs- und/ oder Entschwartungsvorrichtung zuführt.

10. Vorrichtung nach einem der vorhergehenden Ansprüche, **dadurch gekennzeichnet, dass** eine Absaugvorrichtung zum Absaugen der abgetrennten Teile vorgesehen ist.

## Claims

1. Device for derinding or trimming a piece of meat or a part of a carcass by the separation of one or more parts of a piece of meat or of a part of a carcass,
whereby an arrangement device for the piece is provided,
whereby an industrial robot with a manipulator arm is provided,
whereby a cutting tool that separates the part from the piece is provided,
whereby a sensor system that detects the coordinates of the surface of the part that is to be separated from the piece is provided, and
whereby the sensor system comprises a camera and an image processing system,
**characterised in that**
a moveable or stationary skinning and/or derinding device with a blade and a draw roller pressing the piece against the blade is provided as the cutting tool, and
that the cutting tool is provided on the manipulator arm or that the manipulator arm is equipped with a gripper.

2. Device according to claim 1, **characterised in that** the sensor system comprises a distance measuring system that determines the distance between a predefined zero point and a measuring point on the surface of the piece.

3. Device according to claim 2, **characterised in that** a transmitter, a receiver and an evaluation unit are provided as the distance measuring system.

4. Device according to claim 2, **characterised in that** the distance measuring system is equipped with three transmitters and receivers for the proximity-type determination of the distance between a zero point and three measuring points on the surface of the piece.

5. Device according to claims 3 or 4, **characterised in that** optical or acoustic transmitters and receivers are provided.

6. Device according to one of the previous claims, **characterised in that** a conveyor belt is provided as an arrangement device.

7. Device according to one of the previous claims, **characterised in that** a plate and several clamps for fixing the piece to the plate are provided as an arrangement device.

8. Device according to claim 7, **characterised in that** the plate is of a different colour to that of the piece.

9. Device according to claim 6, **characterised in that** the industrial robot is provided with a gripper that picks up the piece from the conveyor belt and feeds it to a stationary skinning and/or derinding device.

10. Device according to one of the previous claims, **characterised in that** a suction device for extracting the separated parts by suction is provided.

## Revendications

1. Dispositif à découenner ou parer un morceau de viande ou une partie d'une carcasse par découpage d'une ou plusieurs parties d'un morceau de viande ou d'une partie de carcasse,
à l'occasion de quoi est prévu un dispositif d'orientation pour orienter le morceau,
à l'occasion de quoi est prévu un robot industriel avec un bras manipulateur,
à l'occasion de quoi est prévu un outil de découpage qui sépare la pièce du morceau,
à l'occasion de quoi est prévu un système de capteurs qui reconnaît les coordonnées de la surface de la pièce devant être séparée du morceau et
à l'occasion de quoi le système de capteurs comporte une caméra et un système de traitement d'images.
Dispositif **caractérisé en ce que**,
comme outil de découpage, un dispositif mobile ou fixe d'écorchage et/ou de découennage avec une lame et un tambour de traction appuyant le morceau contre la lame est prévu et
**en ce que** l'outil de découpage est prévu sur le bras manipulateur ou **en ce que** le bras manipulateur est équipé d'un grappin.

2. Dispositif selon la revendication 1, **caractérisé en ce que** le système de capteurs englobe un système de mesure de la distance qui détermine la distance entre un point zéro prescrit et un point de mesure à la surface du morceau.

3. Dispositif selon la revendication 2, **caractérisé en ce qu'**un émetteur, un récepteur et une unité d'évaluation sont prévus comme système de mesure de la distance.

4. Dispositif selon la revendication 2, **caractérisé en ce que** le système de mesure de la distance est équipé de trois émetteurs et récepteurs pour une détermination sans contact de la distance entre un point zéro et trois points de mesure à la surface du morceau.

5. Dispositif selon la revendication 3 ou 4, **caractérisé en ce que** des émetteurs et récepteurs optiques ou acoustiques sont prévus.

6. Dispositif selon l'une des revendications précédentes, **caractérisé en ce qu'**une courroie de transport est prévue comme dispositif d'orientation.

7. Dispositif selon l'une des revendications précédentes, **caractérisé en ce qu'**une plaque et plusieurs agrafes pour la fixation du morceau contre la plaque sont prévues comme dispositif d'orientation.

8. Dispositif selon la revendication 7, **caractérisé en ce que** la plaque est peinte dans une couleur différente de la couleur du morceau.

9. Dispositif selon la revendication 6, **caractérisé en ce que**, sur le robot industriel, un grappin qui saisit le morceau sur la courroie de transport et l'amène contre un dispositif d'écorchage et/ou de découennage fixe est prévu.

10. Dispositif selon l'une des revendications précédentes, **caractérisé en ce qu'**un dispositif d'aspiration est prévu pour aspirer les parties découpées.
